# EUROPEAN PATENT SPECIFICATION

(11) **EP 3 008 410 B1**
(45) Date of publication and mention of the grant of the patent: **12.07.2017**
(21) Application number: 14731167.4
(22) Date of filing: 30.05.2014
(51) Int. Cl.: F25D 23/12, A23G 9/12

(54) **A REFRIGERATOR COMPRISING AN ICE CREAM MAKING DEVICE**
KÜHLSCHRANK MIT EINER SPEISEEISMASCHINENVORRICHTUNG
RÉFRIGÉRATEUR COMPRENANT UN DISPOSITIF DE FABRICATION DE CRÈME GLACÉE

(30) Priority: 13.06.2013 TR 201307151
(43) Date of publication of application: 20.04.2016
(73) Proprietor: Arçelik Anonim Sirketi, 34950 Istanbul (TR)
(72) Inventor: AKAN, Samet, 34950 Istanbul (TR); MUTLU, Sunay, 34950 Istanbul (TR); DEMIRKAN, Urfet, 34950 Istanbul (TR); ALPTEKIN, Ahmet, 34950 Istanbul (TR); ONRAT, Onur, 34950 Istanbul (TR)
(86) International application number: PCT/EP2014/061227
(87) International publication number: WO 2014/198558

(56) References cited:
- EP-A2- 0 105 586
- WO-A1-2012/122594
- US-A- 1 787 837
- US-A- 1 978 176
- US-A- 3 952 538

## Description

The present invention relates to a refrigerator comprising an ice cream making device which enables the making of ice cream.

Refrigerators comprise a fresh food compartment wherein foods and beverages are stored, a freezing compartment that enables foods to be stored by being frozen, and an ice cream making device that is disposed in the freezing compartment and that enables the user to make ice cream inside the refrigerator. The position of the ice cream making device gains importance not only for easy of production and assembly but also for providing ease of utilization. A considerably detailed and high cost design alteration is required in the freezing compartment of the refrigerator in order to adapt the ice cream making device to the refrigerator. In the state of the art, the mixer apparatus enabling the ingredients of ice cream to be mixed, the motor and the actuation mechanisms that rotate the mixer apparatus are located at the upper side of the receptacle wherein ice cream is made. The said motor and actuation mechanisms occupy too much space in the freezing compartment thus the number of parts and cost of the system increase.

In the state of the art Great Britain Patent Application No. GB707085A, an electrically driven ice-cream mixer is disclosed, which is arranged within a separate cabinet inside the refrigerating compartment.

In the state of the art Japanese Patent Application No. JP2008142017A, an ice cream maker is described, which is situated inside the freezing compartment of the refrigerator and the energy consumption of which is decreased.

In the state of the art, United States Patent Application No. US1787837A discloses a refrigerator according to the preamble of claim 1.

The aim of the present invention is the realization of a refrigerator comprising an ice cream making device which enables the user to make ice cream in a practical manner.

Another aim of the present invention is the realization of an ice cream making device which provides convenience in production, assembly and serviceability.

The refrigerator realized in order to attain the aim of the present invention, explicated in the first claim and the respective claims thereof, comprises an ice cream making device that can be mounted to/dismounted from the freezing compartment as a single unit together with the motor and the transmission means and that has a receptacle and an outer cabinet, enabling foodstuffs to be stored inside the cabinet.

The ice cream making device comprises a housing at the bottom wall of the cabinet whereon the receptacle is mounted, an extension that extends from the bottom wall towards outside the cabinet and that supports the motor, and a casing that is attached to the bottom wall of the cabinet and that carries the motor and the transmission means. A front cover is disposed at the front of the cabinet, which enables the cabinet to be used as a separate compartment inside the freezing compartment.

In an embodiment of the present invention, the ice cream making device is placed on the shelf contained in the refrigerator freezing compartment.

In another embodiment of the present invention, the ice cream making device motor is disposed behind the cabinet, between the cabinet and the freezing compartment rear wall.

In an embodiment of the present invention, the transmission means comprises at least one gear.

In another embodiment of the present invention, the transmission means comprises a belt-pulley mechanism.

In an embodiment of the present invention, the receptacle is locked into the housing inside the cabinet by being rotated in the rotational direction of the mixer.

In an embodiment of the present invention, the refrigerator comprises a socket that is disposed on the freezing compartment wall and that enables the electrical connection of the motor to be made. The motor is connected to the socket by means of a plug.

The ice cream making device comprises the cabinet that is fixed to the side and/or upper wall of the freezing compartment.

In another embodiment of the present invention, the refrigerator comprises at least one retainer disposed on the ceiling of the freezing compartment and the ice cream making device comprises hanger apparatuses that are situated on the cabinet upper wall and that are fitted over the retainers, thus enabling the ice cream making device to be mounted to the ceiling of the freezing compartment by being suspended.

In another embodiment of the present invention, the refrigerator comprises one or more than one grating that is arranged on the wall of the freezing compartment and that blows cold air into the cabinet. The ice cream making device comprises one or more than one opening on the rear wall of the cabinet, which remains opposite the grating when the cabinet is placed into the freezing compartment.

In another embodiment of the present invention, the ice cream making device comprises a tray that covers the housing whereto the receptacle is placed inside the cabinet and which is used as a supporting shelf for the foodstuffs when ice cream is not made in the cabinet (when the receptacle is taken out of the cabinet).

In another embodiment of the present invention, the ice cream making device comprises at least two protrusions that are disposed on the opposite walls of the cabinet and that enable the tray to be positioned in the cabinet at a higher level than the base of the cabinet.

In another embodiment of the present invention, the refrigerator comprises a cabinet shelf used inside the cabinet and when ice cream is made inside the cabinet (when the receptacle is placed into the cabinet) the cabinet shelf, which is not in use, is stored together with the tray by being mounted under the cabinet ceiling.

By means of the present invention, a refrigerator is realized, that comprises an ice cream making device that can be easily installed, that enables the user to produce ice cream in a practical manner and wherein foodstuffs can be stored as well.

A refrigerator realized in order to attain the aim of the present invention is illustrated in the attached figures, where:
Figure 1 - is the sideways schematic view of a refrigerator wherein the ice cream making device is placed into the freezing compartment.
Figure 2 - is the perspective view of the ice cream making device cabinet, the receptacle and the casing that supports the motor and the transmission means.
Figure 3 - is the bottom view of the ice cream making device cabinet.
Figure 4 - is the view of detail A in Figure 3.
Figure 5 - is the sideways view of the ice cream making device..
Figure 6 - is the bottom view of the ice cream making device..
Figure 7 - is the bottom perspective view of the ice cream making device..
Figure 8 - is the front schematic view of a refrigerator wherein the ice cream making device is placed into the freezing compartment.
Figure 9 - is the perspective view of the freezing compartment when the ice cream making device is not mounted.
Figure 10 - is the perspective view of the freezing compartment from another angle when the ice cream making device is not mounted.
Figure 11 - is the detailed view of the ice cream making device..
Figure 12 - is the perspective view of the ice cream making device cabinet in an embodiment of the present invention.
Figure 13 - is the perspective view of the ice cream making device cabinet in another embodiment of the present invention.

The elements illustrated in the figures are numbered as follows:
1. Refrigerator
2. Fresh food compartment
3. Freezing compartment
4. Ice cream making device
5. Cabinet
6. Receptacle
7. Mixer
8. Motor
9. Transmission means
10. Bottom wall
11. Housing
12. Extension
13. Casing
14. Shelf
15. Gear
16. Tenon
17. Groove
18. Socket
19. Retainer
20. Hanger apparatus
21. Grating
22. Opening
23. Tray
24. Protrusion
25. Cabinet shelf
26. Front cover

The refrigerator (1) comprises a fresh food compartment (2) wherein foodstuffs to be cooled are placed, a freezing compartment (3) wherein foodstuffs to be frozen are placed, and an ice cream making device (4) which is placed into the freezing compartment (3).

The ice cream making device (4) comprises a cabinet (5), a receptacle (6) disposed inside the cabinet (5) and wherein ice cream is prepared, a mixer (7) situated in the receptacle (6), a motor (8) providing the actuation of the mixer (7), and a transmission means (9) that transmits the movement of the motor (8) to the mixer (7).

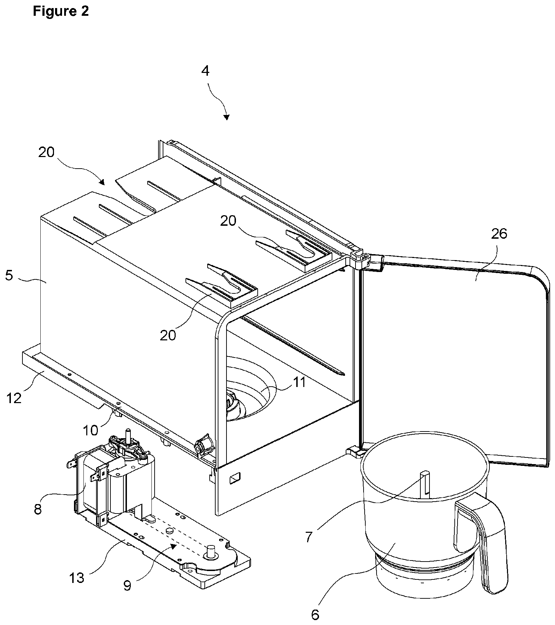

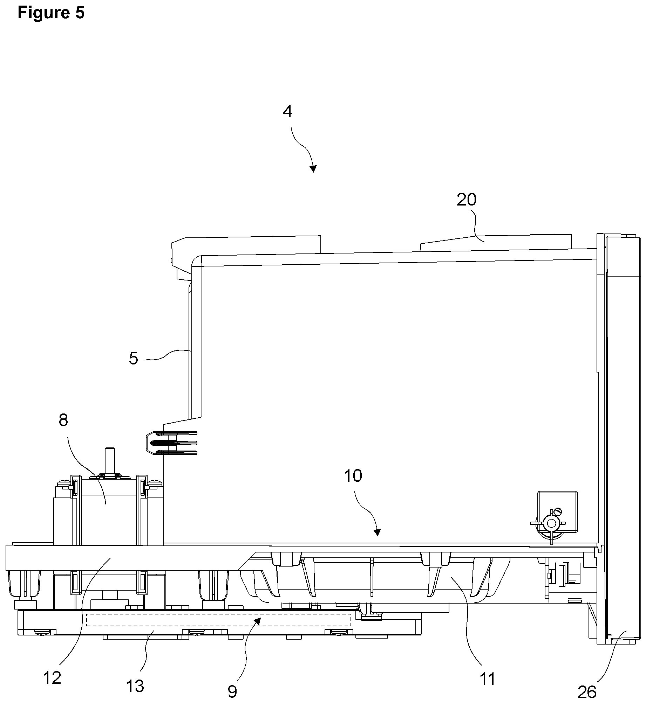

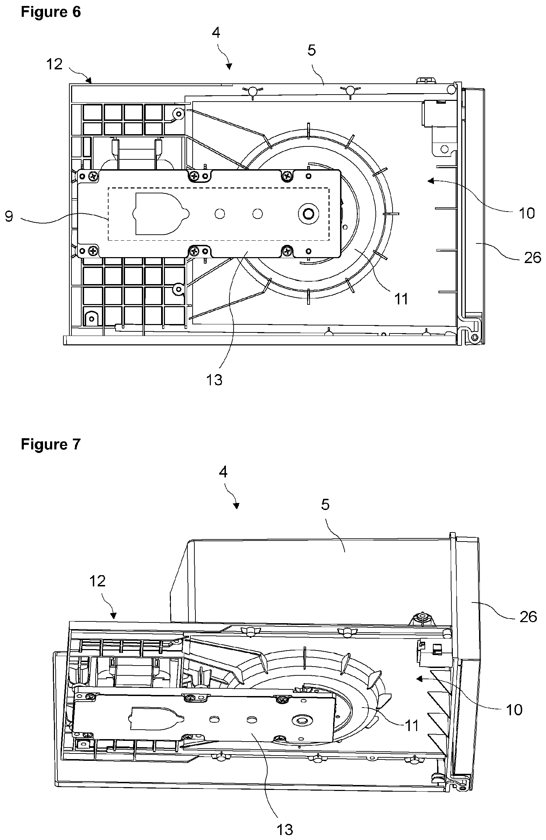

The ice cream making device (4) furthermore comprises
- a bottom wall (10) that forms the base of the cabinet (5),
- a housing (11) that is disposed on the bottom wall (10), whereon the receptacle (6) is mounted,
- an extension (12) that extends from the bottom wall (10) towards the outside of the cabinet (5) and that supports the motor (8) and
- a casing (13) that is connected to the bottom wall (10) and that supports the motor (8) and the transmission means (13) (Figure 2, Figure 5, Figure 6, Figure 7).

The casing (13) that carries the transmission means (9) is fixed to the cabinet (5) from below the extension (12) and the bottom wall (10). The transmission means (9) transmits the drive of the motor (8) to the mixer (7) from the underside of the cabinet (5) and through the housing (11). The ice cream making device (4) is mobile and can be mounted to the freezing compartment (3) and taken out of the freezing compartment (3) together with the cabinet (5), the motor (8), the transmission means (9) and the casing (13) as a single unit, providing ease of use and maintenance. The space occupied by the motor (8) and the transmission means (9) and hence the ice cream making device (4) decreases, and the areas apart from the area the ice cream making device (4) occupies can be used effectively.

The ice cream making device (4) comprises a front cover (26) at the front face of the cabinet (5) facing the user, that is opened/closed and that enables the cabinet (5) to be used as a separated compartment inside the freezing compartment (3), for example, as the fast freezing compartment for foodstuffs other than ice cream.

In the ice cream making device (4) that is activated by a power switch disposed on the refrigerator (1), the mixer (7), disposed inside the receptacle (6) placed over the housing (11), is rotated by means of the motor (8) and the transmission means (9), enabling the ice cream ingredients inside the receptacle (6) to be mixed. The housing (11) is arranged at the bottom wall (10) of the cabinet (5) wherein the receptacle (6) is placed. When the receptacle (6) is seated into the housing (11), the mixer (7) extending through the housing (11) is connected to the transmission means (9). The user can take the receptacle (6) out of the cabinet (5) or place into the cabinet (5) by holding from a handle on the receptacle (6). The user can mount/dismount the ice cream making device (4) to/from the freezing compartment (3) when desired and can use the entire volume of the freezing compartment (3) by taking out the cabinet (5) from the freezing compartment (3). The motor (8) and the transmission means (9) are connected to the cabinet (5) by means of the casing (13) and are carried together with the cabinet (5).

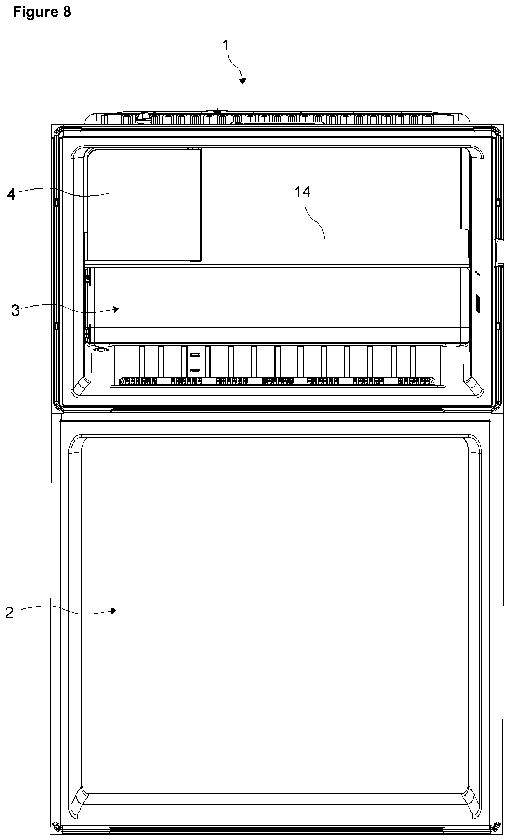

In an embodiment of the present invention, the refrigerator (1) comprises a shelf (14) disposed in the freezing compartment (3) and the ice cream making device (4) that is placed on the shelf (14) (Figure 8).

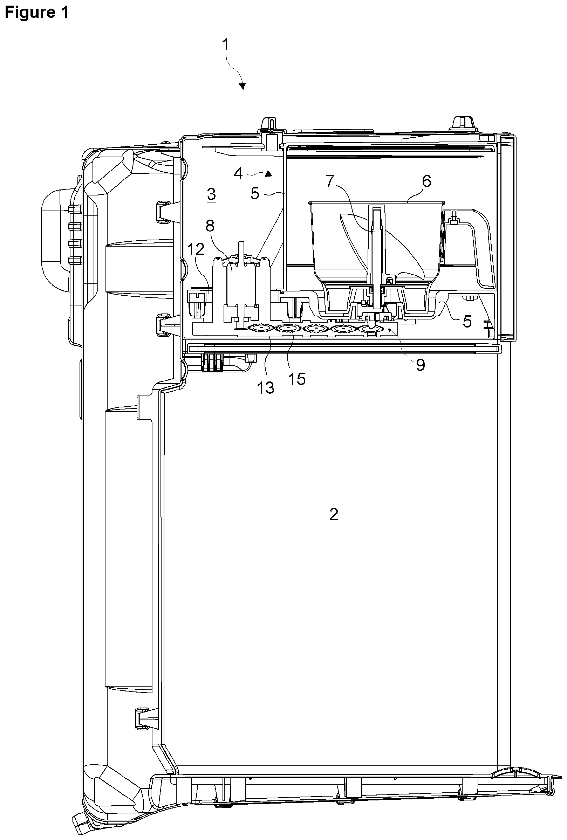

In an embodiment of the present invention, the ice cream making device (4) comprises the motor (8) that is disposed behind the cabinet (5), between the cabinet (5) and the rear wall of the freezing compartment (3) (Figure 1).

In an embodiment of the present invention, the ice cream making device (4) comprises at least one gear (15) included in the transmission means (9) (Figure 1).

In an embodiment of the present invention, the ice cream making device (4) comprises a belt-pulley mechanism (not shown in the figures) included in the transmission means (9).

In an embodiment of the present invention, the receptacle (6) is locked to the housing (11) by being rotated in the rotational direction of the mixer (7). While being placed into the cabinet (5), the receptacle (6) is first seated into the housing (11) and then fixed to its place by the user by being rotated in the rotational direction, previously marked by an arrow, etc., of the mixer (7), hence of the ice cream ingredients rotated by the mixer (7) inside the receptacle (6). When the ice cream making device (4) is operated, the receptacle (6) is forced to rotate with the mixer (7) and the ice cream ingredients with increased consistency, in the same direction and is locked firmly to the housing (11). Installing the receptacle (6) in the rotational direction of the mixer (7) provides a safety precaution in case the user cannot secure the receptacle (6) to the housing (11) properly.

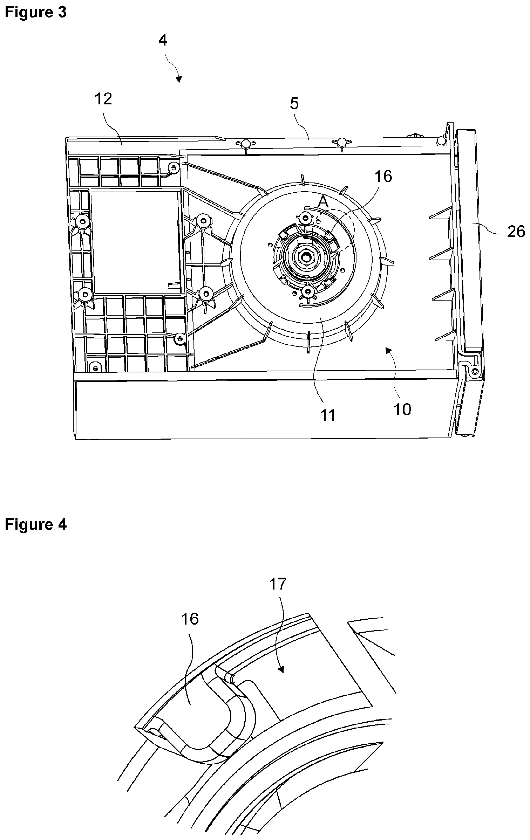

In an embodiment of the present invention, the ice cream making device (4) comprises at least one tenon (16) disposed on the housing (11) or the receptacle (6) and at least one groove (17) that is arranged on the housing (11) or the receptacle (6) wherein the tenon (16) is inserted as the receptacle (6) is seated on the housing (11) and rotated, enabling the receptacle (6) to be locked to the housing (11) (Figure 4). As the receptacle (6) is rotated, the tenon (16) is fitted into the groove (17) and the receptacle (6) is fixed to the cabinet (5). The receptacle (6) can be taken out of the cabinet (5) by being rotated by the user in a direction opposite the rotational direction of the mixer (7).

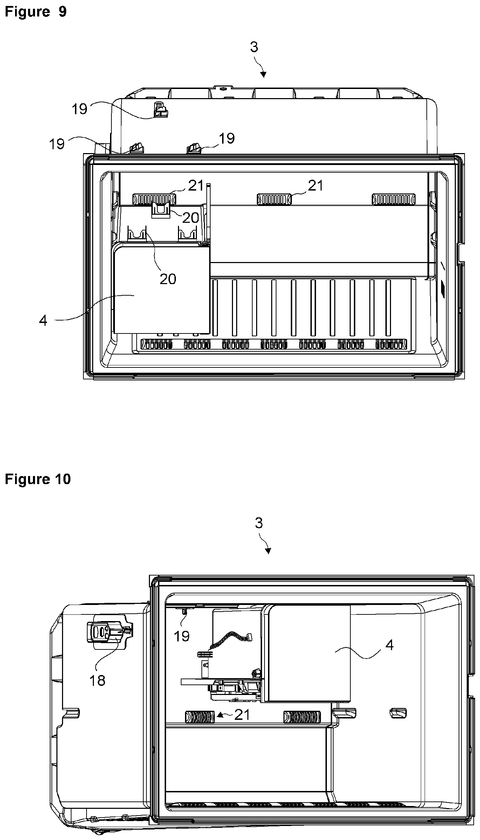

In an embodiment of the present invention, the refrigerator (1) comprises a socket (18) that is disposed on the wall of the freezing compartment (3) and that enables the electrical connection of the motor (8) to be made for operating the ice cream making device (4) (Figure 10).

The ice cream making device (4) comprises the cabinet (5) that is fixed to the side and/or upper wall of the freezing compartment (3). In this embodiment, the ice cream making device (4) is supported by the side and/or upper wall of the freezing compartment (3), the shelf (14) is not required to support the ice cream making device (4), and the user can mount/dismount the free shelf (14) to/from the freezing compartment (3).

In an embodiment of the present invention, the refrigerator (1) comprises at least one retainer (19) disposed on the ceiling of the freezing compartment (3) and the ice cream making device (4) comprises at least one hanger apparatus (20) that is disposed on the upper wall of the cabinet (5), that is fitted over the retainers (19) and that enables the cabinet (5) to be mounted by being suspended from the ceiling of the freezing compartment (3) (Figure 9).

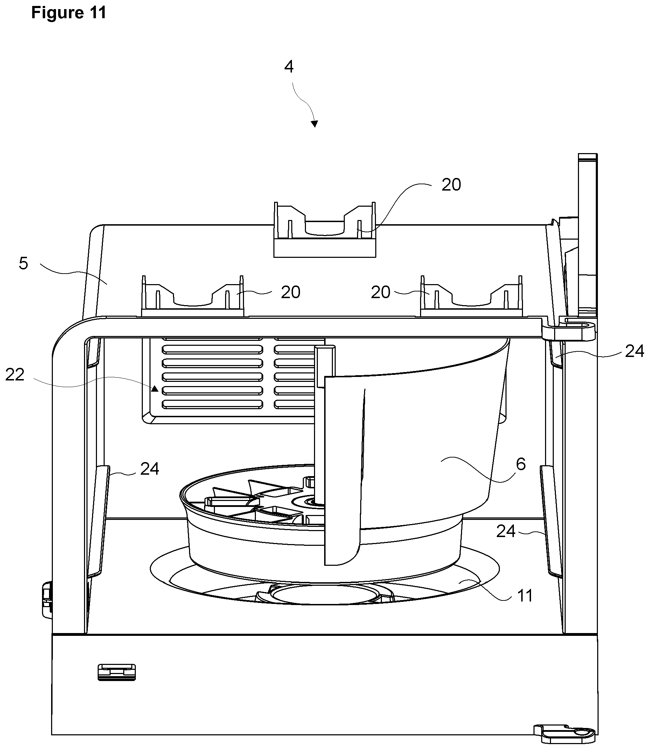

In an embodiment of the present invention, the refrigerator (1) comprises at least one grating (21) that is arranged on the wall of the freezing compartment (3) and that blows cold air into the freezing compartment (3), and the ice cream making device (4) comprises at least one opening (22) that is arranged on the rear wall of the cabinet (5) opposite the grating (21). Consequently, the cabinet (5) is cooled effectively (Figure 9, Figure 10, Figure 11, Figure 12).

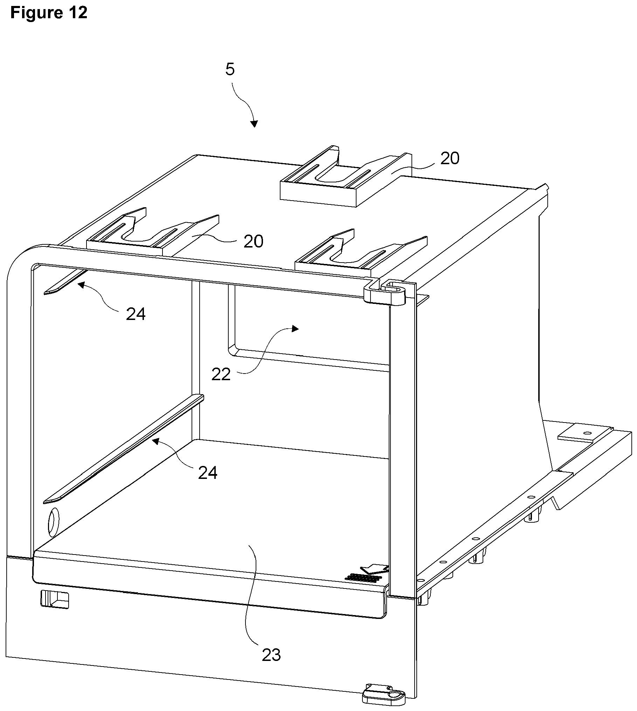

In an embodiment of the present invention, the refrigerator (1) comprises a tray (23) that is used inside the cabinet (5), that covers the housing (11) and that is used for carrying foodstuffs placed into the cabinet (5) when the receptacle (6) is taken out of the cabinet (5). The tray (23) covers the gap formed on the base of the cabinet (5) by the housing (11) when the receptacle (6) is taken out, and foodstuffs are placed on the tray (23) and stored inside the cabinet (5) (Figure 12).

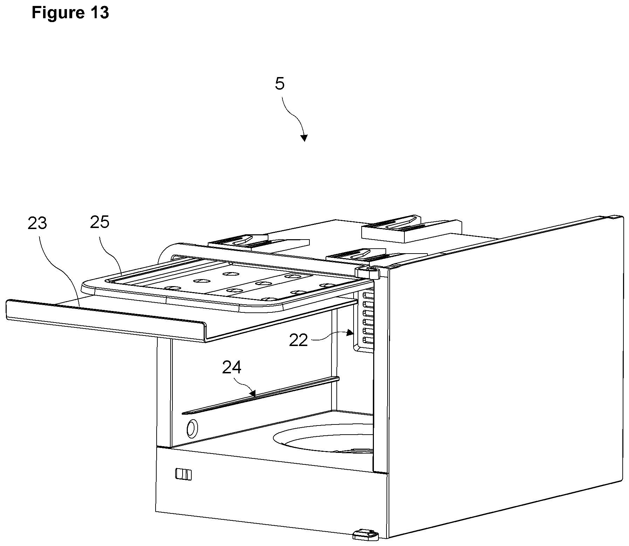

In an embodiment of the present invention, the ice cream making device (4) comprises at least two protrusions (24) that are located on opposite side walls of the cabinet (5) and that enable the tray (23) to be positioned at different levels inside the cabinet (5). The user can use the tray (23) at the desired level inside the cabinet (5) by placing the tray (23) horizontally on the opposite protrusions (24) (Figure 12, Figure 13).

In another embodiment of the present invention, the refrigerator (1) comprises a cabinet shelf (25), preferably of perforated or grilled configuration, that provides the circulation of cold air and that is used for carrying the foodstuffs placed inside the cabinet (5) when the receptacle (6) of the ice cream making device (4) is taken out of the cabinet (5) (Figure 13).

In another embodiment of the present invention, the ice cream making device (4) comprises the tray (23) that is mounted just under the cabinet (5) ceiling together with the cabinet shelf (25) and that enables the cabinet shelf (25) to be stored between the cabinet (5) ceiling and the tray (23) when the receptacle (6) is placed into the cabinet (5) and when the tray (23) and the cabinet shelf (25) are not in use (Figure 13). When the ice cream making device (4) is to be operated, the receptacle (6) is placed into the cabinet (5) and space is created for the receptacle (6) in the cabinet (5) by mounting both the tray (23) and the cabinet shelf (25) under the cabinet (5) ceiling, thereby the tray (23) and the cabinet shelf (25) are prevented from occupying space outside the refrigerator (1) when not in use.

By means of the present invention, a refrigerator (1) is realized, comprising an easy-to-use and maintenance-friendly ice cream making device (4), having a cabinet (5) that enables ice cream to be made by placing the receptacle (6) therein and that is used as a storing compartment wherein the foodstuffs can be stored by taking out the receptacle (6) therefrom, wherein the mixer (7), the motor (8) and the transmission means (9) used for making ice cream can be mounted to, and dismounted from the freezing compartment (3) together with the cabinet (5).

## Claims

1. A refrigerator (1) comprising a fresh food compartment (2) wherein foodstuffs to be cooled are placed, a freezing compartment (3) wherein foodstuffs to be frozen are placed and an ice cream making device (4) having - a cabinet (5) disposed into the freezing compartment (3), - a receptacle (6) situated inside the cabinet (5) wherein ice cream is prepared, - a mixer (7) situated within the receptacle (6), - a motor (8) that actuates and rotates the mixer (7) and - a transmission means (9) that transmits the movement of the motor (8) to the mixer (7),the ice cream making device (4) having - a bottom wall (10) that forms the base of the cabinet (5), - a front cover (26) that is opened and closed at the front face of the cabinet (5) facing the user,wherein - the cabinet (5) is fixed to the side and/or upper wall of the freezing compartment (3), **characterized in that**: - a housing (11) disposed on the bottom wall (10), whereon the receptacle (6) is mounted, - an extension (12) that extends from the bottom wall (10) towards the outside of the cabinet (5) and that supports the motor (8) and - a casing (13) that is attached to the bottom wall (10) and that supports the motor (8) and the transmission means (9), - the mixer (7), the motor (8) and the transmission means (9) can be mounted to, and dismounted from the freezing compartment (3) together with the cabinet (5).

2. A refrigerator (1) as in Claim 1, **characterized by** a shelf (14) disposed in the freezing compartment (3) and the ice cream making device (4) placed on the shelf (14).

3. A refrigerator (1) as in any one of the above claims, **characterized by** the ice cream making device (4) having the motor (8) disposed between the cabinet (5) and the rear wall of the freezing compartment (3).

4. A refrigerator (1) as in any one of the above claims, **characterized by** the ice cream making device (4) having at least one gear (15) included in the transmission means (9).

5. A refrigerator (1) as in any one of the Claims 1 to 3, **characterized by** the ice cream making device (4) having a belt-pulley mechanism included in the transmission means (9).

6. A refrigerator (1) as in any one of the above claims, **characterized by** the ice cream making device (4) having the receptacle (6) that is locked to the housing (11) by being rotated in the rotational direction of the mixer (7).

7. A refrigerator (1) as in Claim 6, **characterized by** the ice cream making device (4) having at least one tenon (16) disposed on the housing (11) or the receptacle (6) and at least one groove (17) arranged on the housing (11) or the receptacle (6), wherein the tenon (16) is inserted as the receptacle (6) is seated on the housing (11) and rotated.

8. A refrigerator (1) as in any one of the above claims, **characterized by** a socket (18) that is disposed on the wall of the freezing compartment (3) and that enables the electrical connection of the motor (8) to be made.

9. A refrigerator (1) as in any one of the above claims, **characterized by** at least one grating (21) that is arranged on the wall of the freezing compartment (3) and that blows cold air into the freezing compartment (3) and the ice cream making device (4) having at least one opening (22) located on the rear wall of the cabinet (5) opposite the grating (21).

10. A refrigerator (1) as in any one of the above claims, **characterized by** a tray (23) used inside the cabinet (5) and that covers the housing (11).

11. A refrigerator (1) as in Claim 10, **characterized by** the ice cream making device (4) having at least two protrusions (24) that are located on opposite side walls of the cabinet (5) and that enable the tray (23) to be positioned at different levels inside the cabinet (5).

12. A refrigerator (1) as in Claim 10 or 11, **characterized by** a cabinet shelf (25) that is used for carrying foodstuffs in the cabinet (5) and the tray (23) that is stored by being mounted just under the cabinet (5) ceiling together with the cabinet shelf (25) when not in use.

## Patentansprüche

1. Ein Kühlschrank (1), umfassend ein Frischhaltefach (2), in welches die gekühlt werdende Lebensmittel hingelegt werden, ein Tiefkühlfach (3), in welches tiefgekühlt werdende Lebensmittel hingelegt werden und eine Eiscreme erzeugende Vorrichtung (4), die folgende umfasst;
- ein Gefäß (5), das in das Tiefkühlfach (3) eingesetzt wird,
- einen Behälter (6), der in dem Eiscreme erzeugende Gefäß (5) platziert ist,
- einen Mischer (7), der in dem Behälter (6) platziert ist,
- einen Motor (8), der den Mischer (7) antreibt und umdreht,
- eine Übertragungsausrüstung (9), die die Bewegung des Motors (8) an den Mischer (7) überträgt,
wobei die Eiscreme erzeugende Vorrichtung (4) ferner folgende aufweist;
- eine Bodenwand (10), die den Untergrund des Gefäßes (5) bildet,
- eine Vordertür (26), die auf der dem Anwender zugewandte vorderen Seite des Gefäßes (5) geöffnet und geschlossen wird,
wobei;
- das Gefäß (5) an die seitliche und/oder obere Wand des Tiefkühlfaches (3) befestigt wird,
**dadurch gekennzeichnet, dass**
- ein Schlitz (11), die auf der Bodenwand (10) platziert ist und darauf der Behälter (6) montiert wird.
- eine Erweiterung (12), die von der Bodenwand (10) ausgehend nach außen aus dem Gefäß (5) erstreckt und den Motor (8) unterstützt, und
- ein Rahmen (13), der an die Bodenwand (10) befestigt ist und den Motor (8) und die Übertragungsausrüstung (9) unterstützt,
- der Mischer (7), der Motor (8) und die Übertragungsausrüstung (9) mit dem Gefäß (5) in das Tiefkühlfach (3) montiert und daraus demontiert werden können.

2. Ein Kühlschrank (1) nach Anspruch 1 **gekennzeichnet durch** ein Regal (14), der in das Tiefkühlfach (3) eingelegt ist und eine Eiscrem erzeugende Vorrichtung (4), die auf dem Regal (14) platziert ist.

3. Ein Kühlschrank (1) nach einem der vorhergehenden Ansprüche **gekennzeichnet durch** eine Eiscrem erzeugende Vorrichtung (4), die einen Motor (8) aufweist, der zwischen dem Gefäß (5) und der hinteren Wand des Tiefkühlfaches (3) angeordnet ist.

4. Ein Kühlschrank (1) nach einem der vorhergehenden Ansprüche **gekennzeichnet durch** eine Eiscreme erzeugende Vorrichtung (4), die ein Zahnrad (15), das der Übertragungsausrüstung (9) gehört, aufweist.

5. Ein Kühlschrank (1) nach einem der Ansprüche 1 bis 3 **gekennzeichnet durch** eine Eiscrem erzeugende Vorrichtung (4), die ein Riemenscheibenmechanismus, das der Übertragungsausrüstung (9) gehört, aufweist

6. Ein Kühlschrank (1) nach einem der vorhergehenden Ansprüche **gekennzeichnet durch** eine Eiscreme erzeugende Vorrichtung (4), die einen Behälter (6), der an den Schlitz (11) durch Drehen des Mischers (7) in Drehrichtung verriegelt wird.

7. Ein Kühlschrank (1), der wie in Anspruch 6 dargestellt, **gekennzeichnet durch** eine Eiscreme erzeugende Vorrichtung (4), die mindestens einen Federkeil (16), der beim Drehen des Federkeils (16) nach dem Aufsetzen des Behälters (6) auf den Schlitz (11) platziert wird, der auf den Schlitz (11) oder auf den Behälter (6) aufgelegt ist und eine Rille (17), die auf dem Schlitz (11) oder auf dem Behälter (6) angeordnet ist, umfasst.

8. Ein Kühlschrank (1) nach einem der vorhergehenden Ansprüche **gekennzeichnet durch** eine Steckdose (18), die auf die Wand des Tiefkühlfaches (3) befestigt wird und den elektrischen Anschluss des Motors (8) gewährleistet.

9. Ein Kühlschrank (1) nach einem der vorhergehenden Ansprüche **gekennzeichnet durch** eine Eiscreme erzeugende Vorrichtung (4), die mindestens einen Gitterrost (21), der auf der Wand des Tiefkühlfaches (3) angeordnet ist und der in das Tiefkühlfach (3) kalte Luft bläst und mindestens eine Öffnung (22), die im Gegensatz zum Gitterrost (21) an der hinteren Wand des Gefäßes (5) vorliegt.

10. Ein Kühlschrank (1) nach einem der vorhergehenden Ansprüche **gekennzeichnet durch** ein Tablett (23), das man im Gefäß (5) benutzt und den ganzen Schlitz (11) abdeckt.

11. Ein Kühlschrank (1) nach Anspruch 10 **gekennzeichnet durch** eine Eiscreme erzeugende Vorrichtung (4), die mindestens zwei Vorsprünge (24) umfasst, die auf en gegenseitigen Wänden des Gefäßes (5) vorliegen und das Positionieren des Tablettes (23) im Gefäß (5) in verschiedenen Niveaus gewährleistet.

12. Ein Kühlschrank (1) nach Anspruch 10 oder 11 **gekennzeichnet durch** ein Gefäßregal (25), das zum Tragen des Lebensmittels im Gefäß (5) verwendet wird und ein Tablett (23), das gelagert wird, in dem man es mit dem Gefäßregal (25) zusammen knapp unterhalb der Decke des Gefäßes (5) montiert.

## Revendications

1. Un réfrigérateur (1) comprenant un compartiment des aliments frais (2) dans lequel sont placés des denrées alimentaires à refroidir, un compartiment de congélation (3) dans lequel des denrées alimentaires à congeler sont placés et un dispositif de fabrication de crème glacée (4) ayant
- une armoire (5) disposée dans le compartiment de congélation (3),
- un récipient (6) situé à l'intérieur de l'armoire (5) dans lequel la crème glacée est préparée,
- un mélangeur (7) situé dans le réceptacle (6),
- un moteur (8) qui actionne et tourne le mélangeur (7) et
- un moyen de transmission (9) qui transmet le mouvement du moteur (8) au mélangeur (7),
le dispositif de fabrication de crème glacée (4) ayant
- une paroi inférieure (10) qui forme la base de l'armoire (5),
- un couvercle avant (26) qui est ouvert et fermé sur la face avant de l'armoire (5) tournée vers l'utilisateur, dans lequel
- l'armoire (5) est fixée sur le côté et/ou la paroi supérieure du compartiment de congélation (3), **caractérisé en ce que**:
- un boîtier (11) disposé sur la paroi inférieure (10), sur lequel est monté le récipient (6)
- une extension (12) qui s'étend depuis la paroi inférieure (10) vers l'extérieur de l'armoire (5) et qui supporte le moteur (8) et
- un boîtier (13) qui est fixé à la paroi inférieure (10) et qui supporte le moteur (8) et le moyen de transmission (9),
- le mélangeur (7), le moteur (8) et le moyen de transmission (9) peuvent être montés et démontés du compartiment de congélation (3) avec l'armoire (5).

2. Un réfrigérateur (1) selon la revendication 1, **caractérisé par** une étagère (14) disposée dans le compartiment de congélation (3) et le dispositif de fabrication de glace (4) placé sur l'étagère (14).

3. Un réfrigérateur (1) selon l'une quelconque des revendications précédentes, **caractérisé par** le dispositif de fabrication de crème glacée (4) comportant le moteur (8) disposé entre l'armoire (5) et la paroi arrière du compartiment de congélation (3).

4. Un réfrigérateur (1) selon l'une quelconque des revendications précédentes, **caractérisé en ce que** le dispositif de fabrication de crème glacée (4) ayant au moins un engrenage (15) inclus dans le moyen de transmission (9).

5. Un réfrigérateur (1) selon l'une quelconque des revendications 1 à 3, **caractérisé par** le dispositif de fabrication de crème glacée (4) ayant un mécanisme de courroie-poulie inclus dans le moyen de transmission (9).

6. Un réfrigérateur (1) selon l'une quelconque des revendications précédentes, **caractérisé par** le dispositif de fabrication de crème glacée (4) ayant le récipient (6) qui est verrouillé sur le boîtier (11) en rotation dans le sens de rotation du mélangeur (7).

7. Un réfrigérateur (1) selon la revendication 6, **caractérisé par** le dispositif de fabrication de crème glacée (4) ayant au moins un tenon (16) disposé sur le boîtier (11) ou le récipient (6) et au moins une rainure (17) agencée sur le boîtier (11) ou le récipient (6), dans lequel le tenon (16) est inséré lorsque le réceptacle (6) est situé sur le boîtier (11) et tourné.

8. Un réfrigérateur (1) selon l'une quelconque des revendications précédentes, **caractérisé par** une douille (18) qui est disposée sur la paroi du compartiment de congélation (3) et qui permet de réaliser la connexion électrique du moteur (8).

9. Un réfrigérateur (1) selon l'une quelconque des revendications précédentes, **caractérisé par** au moins une grille (21) qui est disposée sur la paroi du compartiment de congélation (3) et qui souffle de l'air froid dans le compartiment de congélation (3) et le dispositif de fabrication de crème glacée (4) comportant au moins une ouverture (22) située sur la paroi arrière de l'armoire (5) opposée à la grille (21).

10. Un réfrigérateur (1) selon l'une quelconque des revendications précédentes, **caractérisé par** un plateau (23) utilisé à l'intérieur de l'armoire (5) et qui recouvre le boîtier (11).

11. Un réfrigérateur (1) selon la revendication 10, **caractérisé par** le dispositif de fabrication de crème glacée (4) ayant au moins deux protubérances (24) qui sont situées sur des parois latérales opposées de l'armoire (5) et qui permettent au plateau (23) d' être placé à différents niveaux à l'intérieur de l'armoire (5).

12. Un réfrigérateur (1) selon la revendication 10 ou 11, **caractérisé par** une étagère d'armoire (25) qui est utilisée pour transporter des denrées alimentaires dans l'armoire (5) et le plateau (23) qui est stocké en étant monté juste sous l'armoire (5) plafonnant avec l'étagère de l'armoire (25) lorsqu'il n'est pas utilisé.
